(19) Europäisches Patentamt
European Patent Office
Office européen des brevets

(11) **EP 4 722 993 A1**

(12) **EUROPEAN PATENT APPLICATION**
published in accordance with Art. 153(4) EPC

(43) Date of publication:
**08.04.2026 Bulletin 2026/15**

(21) Application number: **23938552.9**

(22) Date of filing: **25.05.2023**

(51) International Patent Classification (IPC):
**G06N 10/60** (2022.01)    **G06N 3/04** (2023.01)

(52) Cooperative Patent Classification (CPC):
**G06N 3/04; G06N 10/60**

(86) International application number:
**PCT/JP2023/019573**

(87) International publication number:
**WO 2024/241590 (28.11.2024 Gazette 2024/48)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **FUJITSU LIMITED**
**Kawasaki-shi, Kanagawa 211-8588 (JP)**

(72) Inventor: **CHINZEI, Koki**
**Kawasaki-shi, Kanagawa 211-8588 (JP)**

(74) Representative: **Haseltine Lake Kempner LLP**
**Cheapside House**
**138 Cheapside**
**London EC2V 6BJ (GB)**

(54) **INFORMATION PROCESSING PROGRAM, INFORMATION PROCESSING DEVICE, AND INFORMATION PROCESSING METHOD**

(57) A quantum convolutional neural network (QCNN) is expected to be able to process large-scale data sets compared to classical CNNs. QCNN has a problem that the calculation cost increases as the problem size increases. An information processing program causes a computer to execute processing of inputting a quantum state of each of a plurality of qubits into a quantum circuit designed to make each layer of a quantum convolutional neural network symmetric with respect to a translation operation for qubits, executing an operation in a first layer of the quantum convolutional neural network on the plurality of qubits, dividing the plurality of qubits operated in the first layer into a plurality of qubit sets so as to be symmetric with respect to the translation operation, branching each of the plurality of qubits in the qubit sets into a different branch of the quantum circuit to execute the operation in each layer of the quantum convolutional neural network, and measuring a quantum state of each of the plurality of qubits in a final state.

FIG.30

## Description

Technical Field

The present invention relates to a machine learning technique using a quantum computer.

Background Art

A machine learning method using a quantum computer is expected to be applied to various fields such as quantum physics and finance as a method capable of processing a huge data set that a classical computer which is a general computer currently in widespread use is unable to handle. In particular, a quantum neural network in which a neural network is constructed using a quantum circuit has attracted great expectations as a new technology that can exceed a classical neural network.

In addition, there is a quantum convolutional neural network (QCNN) which is one of quantum neural networks and can classify quantum states. QCNN is an extension of a convolutional neural network (CNN), which is a representative classical machine learning model, to quantum machine learning, and is expected to be able to process a large-scale data set as compared to the classical CNN.

Citation List

Patent Literature

Patent Literature 1: Japanese Laid-open Patent Publication No. 2019-096334
Patent Literature 2: Japanese National Publication of International Patent Application No. 2022-509841
Patent Literature 3: US 2022/0101164 A
Patent Literature 4: US 2022/0253741 A

Summary of invention

Technical Problem

However, QCNN has a problem that the calculation cost increases as the problem size increases. For example, in QCNN training, it is expected to update a large number of variational parameters many times for a large amount of training data, and thus, it takes a very long time. In addition, unlike the classical CNN, in order to obtain one output in quantum calculation, it is expected to execute one quantum circuit a plurality of times and calculate an average of the measured values. In addition, a quantum computer is a developing technology, and it is expected to reduce the calculation cost as much as possible in order to solve a large-scale problem in current limited calculation resources.

In one aspect, an object is to execute a QCNN more efficiently.

Solution to Problem

In one aspect, an information processing program causes a computer to execute processing of inputting a quantum state of each of a plurality of qubits into a quantum circuit designed to make each layer of a quantum convolutional neural network symmetric with respect to a translation operation for qubits, executing an operation in a first layer of the quantum convolutional neural network on the plurality of qubits, dividing the plurality of qubits operated in the first layer into a plurality of qubit sets so as to be symmetric with respect to the translation operation, branching each of the plurality of qubits in the qubit sets into a different branch of the quantum circuit to execute the operation in each layer of the quantum convolutional neural network, and measuring a quantum state of each of the plurality of qubits in a final state.

Advantageous Effects of Invention

In one aspect, a QCNN can be executed more efficiently.

Brief Description of Drawings

FIG. 1 is a diagram for describing a QCNN quantum circuit.

FIG. 2 is a diagram for describing translation symmetry and branching of a QCNN.

FIG. 3 is a flowchart illustrating an overall processing flow including confirmation of preconditions of the present embodiment.

FIG. 4 is a diagram for describing the preconditions of the present embodiment.

FIG. 5 is a diagram illustrating a configuration example of an information processing apparatus 10 according to the present embodiment.

FIG. 6 is a diagram for describing translation symmetry of each layer of a QCNN according to the present embodiment.

FIG. 7 is a diagram illustrating an example of layers of a translationally symmetric QCNN according to the present embodiment.

FIG. 8 is a diagram for describing branching of the QCNN according to the present embodiment.

FIG. 9 is a diagram for describing branching of n qubits according to the present embodiment.

FIG. 10 is a diagram for describing branching of a plurality of qubits in a case of a high dimension according to the present embodiment.

FIG. 11 is a flowchart illustrating a flow of QCNN branch processing according to the present embodiment.

FIG. 12 is a diagram for describing average calculation of measured values of qubits according to the present embodiment.

FIG. 13 is a diagram (1) for describing equivalence of measured values of qubits according to the present embodiment.

FIG. 14 is a diagram (2) for describing equivalence of measured values of qubits according to the present embodiment.

FIG. 15 is a flowchart illustrating a flow of output measurement processing by a QCNN branched with translation symmetry according to the present embodiment.

FIG. 16 is a diagram for describing a gradient measurement method for the output of the QCNN according to the present embodiment.

FIG. 17 is a diagram (1) for describing a gradient measurement method in a case where one parameter controls a plurality of gates according to the present embodiment.

FIG. 18 is a diagram (2) for describing a gradient measurement method in a case where one parameter controls a plurality of gates according to the present embodiment.

FIG. 19 is a diagram (1) for describing efficiency measurement of gradient by a branched QCNN according to the present embodiment.

FIG. 20 is a diagram (2) for describing efficiency measurement of gradient by the branched QCNN according to the present embodiment.

FIG. 21 is a diagram (3) for describing efficiency measurement of gradient by the branched QCNN according to the present embodiment.

FIG. 22 is a flowchart illustrating a flow of gradient measurement processing for output of the QCNN according to the present embodiment.

FIG. 23 is a flowchart illustrating a flow of derivative measurement processing by a parameter shift method according to the present embodiment.

FIG. 24 is a diagram illustrating an example of a phase diagram of a ground state of Hamiltonian.

FIG. 25 is a diagram illustrating an example of a relationship between the phase diagram of the ground state of the Hamiltonian and training data of the QCNN.

FIG. 26 is a diagram illustrating an example of a change in a loss function due to variational parameter update.

FIG. 27 is a diagram illustrating an example of prediction results for each problem size for training data using a trained QCNN.

FIG. 28 is a diagram illustrating an example of prediction results for each problem size for unknown data using a trained QCNN.

FIG. 29 is a diagram illustrating an example of a probability distribution of an estimated value.

FIG. 30 is a diagram illustrating an example of a quantum circuit of each of a branched QCNN and an unbranched QCNN.

FIG. 31 is a diagram illustrating an example of measurement efficiency by branching of a QCNN for three representative states.

FIG. 32 is a diagram illustrating another example of measurement efficiency by branching of the QCNN for three representative states.

FIG. 33 is a diagram illustrating a hardware configuration example of the information processing apparatus 10 according to the present embodiment.

Embodiments for Carrying Out the Invention

Hereinafter, examples of an information processing program, an information processing apparatus, and an information processing method according to the present embodiment will be described in detail with reference to the drawings. Note that the present embodiment is not limited to these examples. In addition, the examples can be appropriately combined within a range without inconsistency.

First, a quantum convolutional neural network (QCNN) will be described. The QCNN is an extension of a convolutional neural network (CNN), which is a representative classical machine learning model, to quantum machine learning by constructing the QCNN using a quantum circuit.

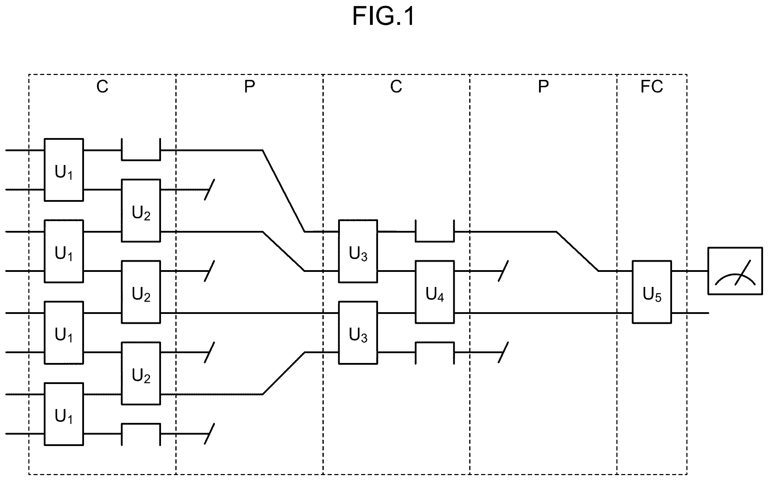

FIG. 1 is a diagram for describing a QCNN quantum circuit. As illustrated in FIG. 1, the QCNN quantum circuit includes, for example, three layers of a C layer, a P layer, and an FC layer. The C layer is, for example, a convolution layer, and is a layer that performs local unitary transformation and extracts a feature amount. The P layer is, for example, a pooling layer, and is a layer that reduces qubits and performs roughening of a quantum state. The FC layer is, for example, a fully connected layer, and is a layer that performs unitary transformation of combining all qubits. In the QCNN quantum circuit, for example, features of quantum correlation of various length scales can be trained by alternately performing convolution and pooling. Furthermore, in the QCNN quantum circuit, for example, the C layer and the P layer are caused to alternately operate, and the fully connected layer is caused to operate when the number of qubits is sufficiently reduced. Then, the quantum state of the qubits remaining after the fully connected layer operates is measured, and an expected value is set as the output of the QCNN.

In addition, the unitary transformations indicated by $U_1$ to $U_5$ in FIG. 1 are trained using training data. The training data includes, for example, a set of a quantum state and a correct answer label, and can be expressed by the following formula (1).

$$\{|\phi_i\rangle, y_i\}_{i=1\sim N_t} \qquad \cdots (1)$$

In Formula (1), for example, Nt is the number of pieces of training data. Furthermore, the values of correct answer labels correspond to QCNN prediction, and are classified, for example, as a cat image if "$y_i=1$" and an image other than a cat if "$y_i=0$" in image recognition. Furthermore, a loss function at the time of training can be expressed by, for example, the following formula (2).

$$L(\{\langle Z_1(\theta)\rangle_i\}) = \frac{1}{N_t}\sum_{i=1}^{N_t}(y_i - \langle Z_1(\theta)\rangle_i)^2, \langle Z_1(\theta)\rangle_i = \langle\phi_i|U(\theta)^\dagger Z_1 U(\theta)|\phi_i\rangle \qquad \cdots (2)$$

In Formula (2), $Z_1$ is, for example, a Z operator of the first qubit, and is a physical quantity to be measured. Furthermore, for example, $U(\theta)$ is the entire unitary transformation of the QCNN, and $\theta$ is a parameter of the unitary transformation. Then, $\theta$ is optimized to minimize the loss function expressed by Formula (2). As an optimization method, for example, a gradient descent method of optimizing a parameter on the basis of a gradient of a loss function, which is an existing technology, is used. Then, in parameter optimization, for example, a gradient of a quantum computer loss function is calculated, and a classical computer updates parameters on the basis of the result. Parameters are optimized by alternately repeating such processing many times. Finally, prediction for unknown data is performed by a trained QCNN.

While such a QCNN makes it possible to process a large-scale data set as compared to a classical CNN, the QCNN has a problem that the calculation time increases as the problem size increases. In particular, in QCNN training, it is expected to update a large number of variational parameters many times for a large amount of training data, and thus it takes a very long processing time. For example, O(n) (n is a qubit number) is expected as one update time of parameters per training data. In addition, a quantum computer is a developing technology, and it is expected to reduce a calculation cost as much as possible in order to solve a large-scale problem in current limited calculation resources. In addition, unlike the classical CNN, in order to obtain one output in quantum calculation, it is expected to execute the quantum circuit a plurality of times and calculate the average of measured values, and this measurement inefficiency is one of the factors that lower the calculation efficiency of the QCNN.

Therefore, an object of the present embodiment is to more efficiently execute the QCNN. In the present embodiment, for example, in order to effectively utilize the qubits discarded in the P layer of the conventional QCNN quantum circuit as illustrated in FIG. 1, the circuit is branched, and subsequent calculations are executed in parallel for the qubits that are originally discarded. This makes it possible to measure quantum states of many qubits at a time, and to improve the measurement efficiency of the QCNN, and thus the execution efficiency. Here, the qubits discarded in the P layer are, for example, qubits of a portion where the circuit is not connected to the next C layer and is disconnected in the P layer of the QCNN quantum circuit illustrated in FIG. 1. As illustrated in FIG. 1, only one qubit operated in $U_5$ of the FC layer is measured, and the other qubit is discarded. In addition, in order to realize parallel calculation by branching, it is expected to return the same value at all branch destinations when the circuit is branched, and for this reason, an operation of translation symmetry for each layer of the QCNN is expected.

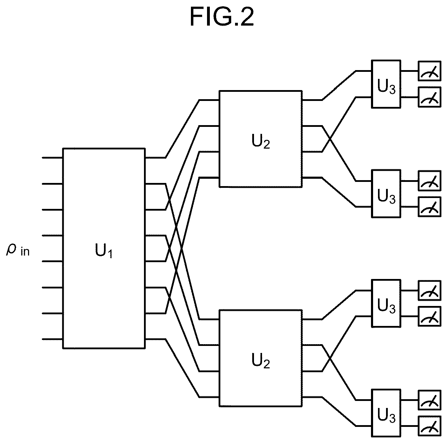

FIG. 2 is a diagram for describing translation symmetry and branching of the QCNN. FIG. 2 illustrates a quantum circuit of a QCNN branched with translation symmetry in order to effectively utilize qubits that are originally discarded. As illustrated in FIG. 2, the circuit is branched without discarding each qubit subjected to unitary transformation operations in $U_1$ to $U_3$. Furthermore, at this time, each layer is subjected to translation symmetry such that the same value is returned in all branch destinations, and the same unitary transformation is applied to each branch after branching.

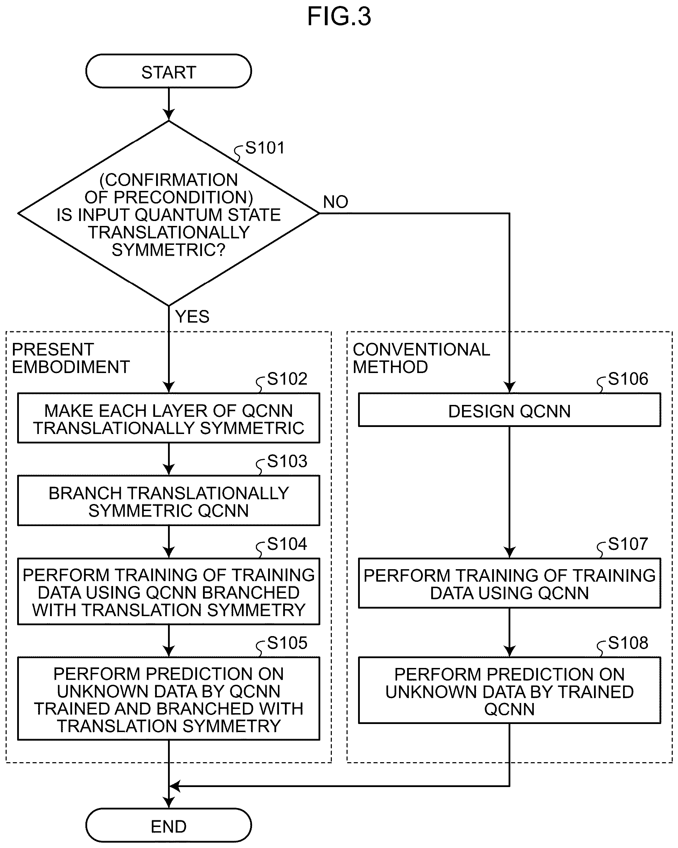

In the present embodiment, preconditions for input data are imposed in order to return the same value in all branch destinations. Therefore, an overall processing flow of the present embodiment is as illustrated in FIG. 3. FIG. 3 is a flowchart illustrating an overall processing flow including confirmation of preconditions of the present embodiment.

In FIG. 3, the flow after step S102 is the processing flow of the present embodiment, but preconditions are confirmed in step S101 before the processing flow of the present embodiment. In step S101, as confirmation of the preconditions, for example, it is confirmed whether or not an input quantum state is translationally symmetric, that is, whether or not the input quantum state can return the same value at all branch destinations when the circuit is branched, as illustrated in FIG. 3. Note that whether or not the input quantum state is translationally symmetric can be determined using, for example, a Hamiltonian equation that is an existing algorithm.

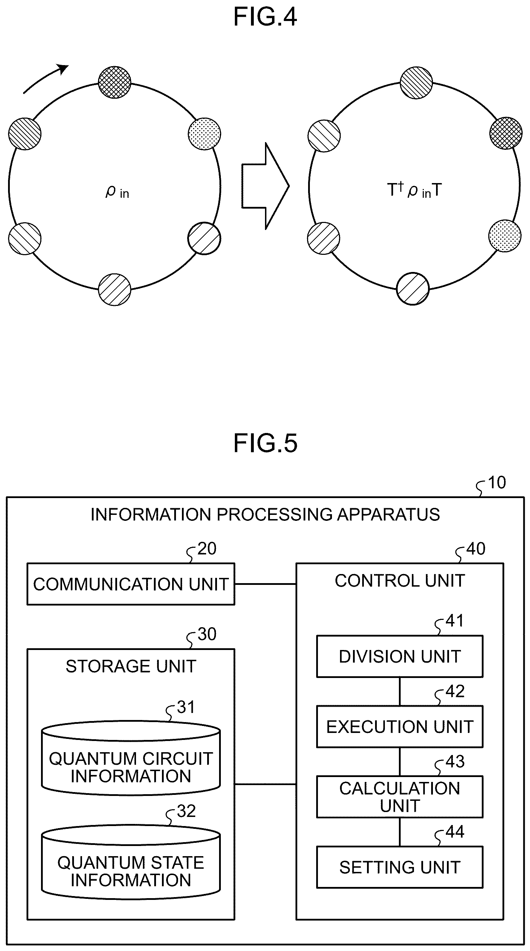

FIG. 4 is a diagram for describing preconditions of the present embodiment. A precondition of the present embodiment is that an input quantum state, that is, input data is translationally symmetric, and this is, for example, that the following formula (3) holds in a case where qubits are periodically arranged in one dimension as illustrated in FIG. 4.

$$T^{\dagger} \rho_{in} T = \rho_{in} \qquad \cdots (3)$$

In Formula (3), for example, $\rho_{in}$ represents an input quantum state, and T represents unitary transformation that translates one qubit. As illustrated in FIG. 4, when $\rho_{in}$ and $T^{\dagger}\rho_{in}T$ are equal even if the input quantum state is translated by one qubit using the equation of Formula (3), it is determined that the input quantum state is translationally symmetric.

When the input quantum state is translationally symmetric (step S101: Yes), processing proceeds to the present embodiment, and each layer of the QCNN is translationally symmetric (step S102) and branched (step S103). Then, training using training data is performed using the QCNN branched with translation symmetry (step S104). Furthermore, unknown data is predicted by the QCNN branched with translation symmetry trained in step S104 (step S105). After execution of step S105, the overall processing illustrated in FIG. 3 ends.

On the other hand, when the input quantum state is not translationally symmetric (step S101: No), processing proceeds to the conventional method, and QCNN as illustrated in FIG. 1 is designed (step S106). Then, training using training data is performed using the QCNN as illustrated in FIG. 1 (step S107). Furthermore, unknown data is predicted by the QCNN trained in step S107 (step S108). After execution of step S108, the overall processing illustrated in FIG. 3 ends.

(Functional Configuration of Information Processing Apparatus 10)

Next, a functional configuration of the information processing apparatus 10 serving as an operation subject of the present embodiment will be described. FIG. 5 is a diagram illustrating a configuration example of the information processing apparatus 10 according to the present embodiment. The information processing apparatus 10 illustrated in FIG. 5 is, for example, a quantum computer, and is an information processing apparatus such as a server computer, a desktop personal computer (PC), or a notebook PC. Note that, in FIG. 5, the information processing apparatus 10 is illustrated as one computer, but may be a distributed computing system including a plurality of computers. Furthermore, the information processing apparatus 10 may be a cloud computer apparatus managed by a service provider that provides a cloud computing service.

As illustrated in FIG. 5, the information processing apparatus 10 includes a communication unit 20, a storage unit 30, and a control unit 40.

The communication unit 20 is a processing unit that controls communication with other devices, and is, for example, a communication interface such as a network interface card or a universal serial bus (USB) interface.

The storage unit 30 has a function of storing various types of data and a program executed by the control unit 40, and is realized by, for example, a storage device such as a memory or a hard disk. The storage unit 30 stores quantum circuit information 31, quantum state information 32, and the like.

The quantum circuit information 31 stores, for example, information regarding a QCNN quantum circuit. More specifically, the quantum circuit information 31 stores, for example, information regarding the quantum circuit of the QCNN branched with translation symmetry as illustrated in FIG. 2.

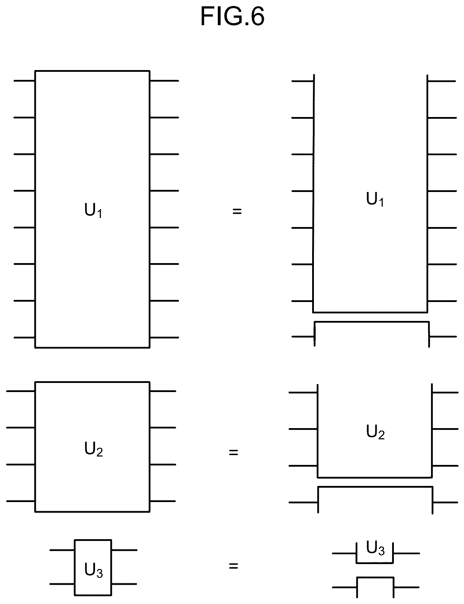

Here, translation symmetry for each layer of the QCNN will be described. FIG. 6 is a diagram for describing translation symmetry of each layer of the QCNN according to the present embodiment. As illustrated in FIG. 6, the quantum circuit of the QCNN is constructed such that the convolution/fully connected layers are symmetric with respect to a translation operation for one qubit. Specifically, translation symmetry is performed by an appropriate combination of gate operations on qubits. This point will be described using layers of a translationally symmetric QCNN.

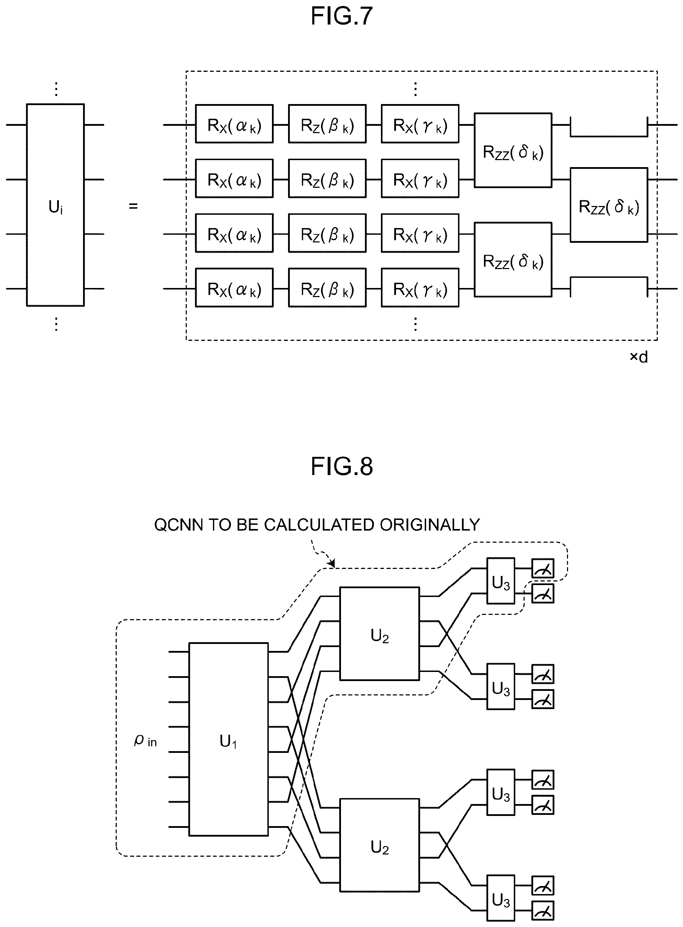

FIG. 7 is a diagram illustrating an example of layers of a translationally symmetric QCNN according to the present embodiment. FIG. 7 is an example illustrating one-dimensional translationally symmetric layers. As illustrated in FIG. 7, in each of the convolution/fully connected layers, an operation of continuously applying an X rotation gate, a Z rotation gate, and the X rotation gate to all the qubits and applying a ZZ rotation gate to adjacent qubits is repeated d times. It is also assumed that the rotation angles of the rotation gates applied in parallel are the same. The translation symmetry of the layers is performed by such an operation. Note that the rotation angle when the X rotation gate or the Z rotation gate is applied is a variational parameter expected to be updated many times with respect to a large amount of training data in QCNN training.

Branching of the quantum circuit of the QCNN branched with translation symmetry will be described. FIG. 8 is a diagram for describing branching of the QCNN according to the present embodiment. Further, a portion surrounded by a broken line in FIG. 8 is a portion of the QCNN that is originally desired to be calculated. Therefore, in the conventional QCNN quantum circuit, qubits other than the portion of the QCNN to be originally calculated are discarded in the pooling layer. Further, only one of the qubits after the operation in the fully connected layer is measured, and the other is discarded. Therefore, in the present embodiment, as illustrated in FIG. 8, the circuit is branched without discarding the qubits other than the portion of the QCNN that is originally desired to be calculated, and the same operation as that for the portion of the QCNN that is originally desired to be calculated is performed on sets of qubits after branching.

In this manner, for example, when described with reference to FIG. 8, only a measured value of one qubit of the portion of the QCNN that is originally desired to be calculated can be obtained in one execution in the conventional QCNN quantum circuit, whereas measured values of eight qubits are obtained in the present embodiment. As a result, the information processing apparatus 10 can execute the QCNN more efficiently. In addition, although the amount of processing increases as the qubits are used without being discarded, in a quantum computer system such as superconducting, it may take some time to rearrange qubits, but since all operations after branching can be performed in parallel, there is almost no increase in calculation time due to branching.

Returning to the description of FIG. 5, the quantum state information 32 stores, for example, information regarding a quantum state that is a state of a qubit in the quantum computer that is the information processing apparatus 10, and the like. More specifically, for example, information regarding measured quantum states is stored in the quantum state information 32. Note that the information regarding the measured quantum states may include, in addition to measured values of quantum states of qubits in the final state, an average value of the measured values for use as an output of the QCNN, a gradient of the calculated output of the QCNN, and the like. Furthermore, the quantum state information 32 may store, for example, information regarding training data.

Note that the above information stored in the storage unit 30 is merely an example, and the storage unit 30 can store various types of information other than the above information.

The control unit 40 is a processing unit that controls the entire information processing apparatus 10, and is, for example, a processor or the like. The control unit 40 includes a division unit 41, an execution unit 42, a calculation unit 43, and a setting unit 44. Note that each processing unit is an example of an electronic circuit included in the processor or an example of a process executed by the processor.

For example, the division unit 41 divides a plurality of qubits operated in each layer of the QCNN into a plurality of qubit sets so as to be symmetric with respect to a translation operation. Here, the plurality of qubits operated in each layer of the QCNN is, for example, a plurality of qubits input to a quantum circuit designed to make each layer of the QCNN symmetric with respect to a translation operation for the qubits. Furthermore, the division of the plurality of qubits by the division unit 41 is, for example, to divide the plurality of qubits such that the same operation is performed on each of the qubit sets after branching as illustrated in FIG. 8. FIG. 8 illustrates an example of eight qubits, but n qubits can be divided.

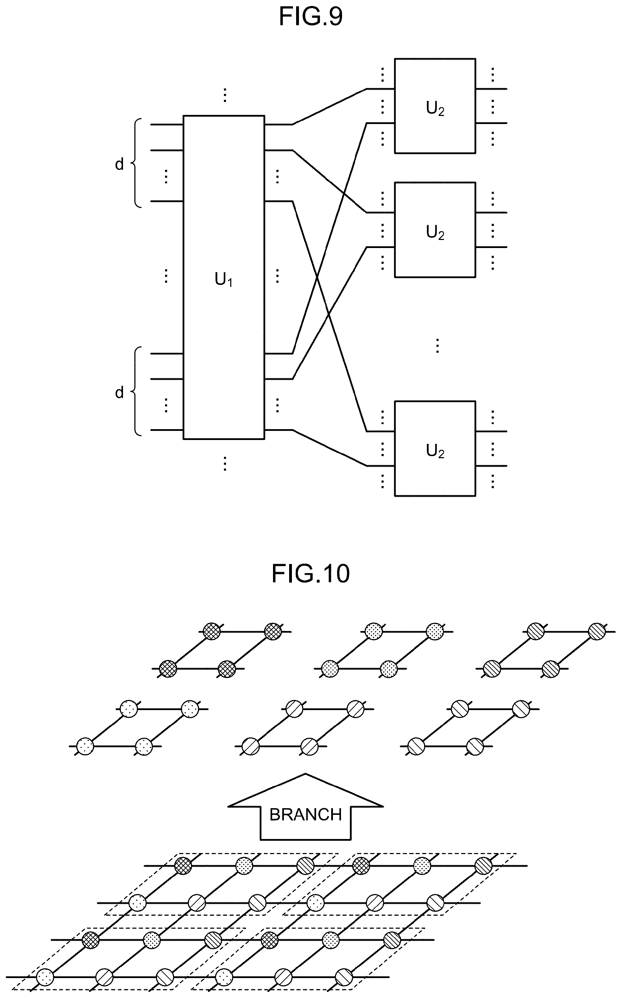

FIG. 9 is a diagram for describing branching of n qubits according to the present embodiment. Furthermore, FIG. 9 illustrates an example in which n qubits are branched into d branch destinations (n is an arbitrary natural number, and d is a divisor of n). For example, the division unit 41 divides n qubits into "blocks including d qubits $\times n/d$." The qubits of each block are branched into different branches of the QCNN quantum circuit, and after branching, the same operation is performed on all the branches. Note that the division unit 41 can similarly divide the qubits even in a high dimension, for example.

FIG. 10 is a diagram for describing branching of a plurality of qubits in a case of a high dimension according to the present embodiment. FIG. 10 illustrates branching of $2\times3$ blocks of a two-dimensional square lattice. For example, as indicated by a broken line in the lower part of FIG. 10, the division unit 41 divides the two-dimensional square lattice of qubits into small blocks including six $2\times3$ qubits. At this time, the two-dimensional square lattice of qubits is divided such that the blocks are translationally symmetric. The six qubits in each block are branched into different branches, and after branching, the same operation is performed on all the branches.

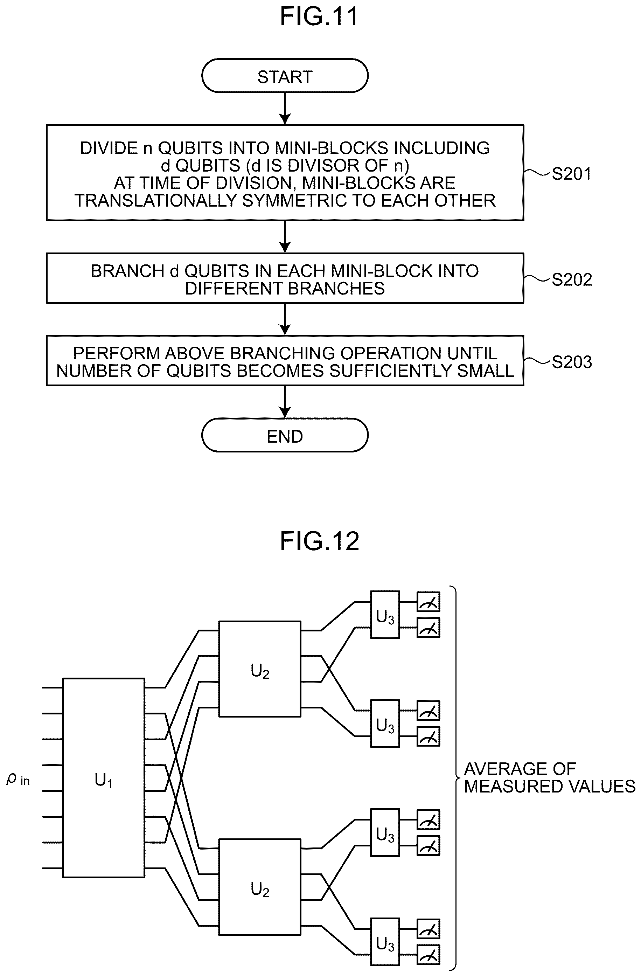

The flow of QCNN branching processing including division of the qubits by the division unit 41 as described above will be described. FIG. 11 is a flowchart illustrating a flow of QCNN branching processing according to the present embodiment.

First, as illustrated in FIG. 11, the information processing apparatus 10 divides, for example, n qubits into mini-blocks including d qubits (step S201). At this time, division is performed such that the mini-blocks are translationally symmetric with each other. In addition, d is set to be a divisor of n.

Next, for example, the information processing apparatus 10 branches the d qubits in each mini-block divided in step S201 into different branches of the QCNN quantum circuit (step S202).

Then, for example, the information processing apparatus 10 performs the division processing in step S201 and the branching processing in step S202 on each qubit after operation in the layer of the branch destination until the number of qubits becomes sufficiently small (step S203). Here, "until the number of qubits becomes sufficiently small" means, for example, "until the number of qubits to be divided and branched becomes two" as in the QCNN quantum circuit illustrated in FIG. 8. After execution of step S203, the branching processing illustrated in FIG. 11 ends.

Returning to the description of FIG. 5, for example, the execution unit 42 branches each of the plurality of qubits in the qubit sets divided by the division unit 41 into different branches of the quantum circuit and executes the operation in each layer of the QCNN. Then, the execution unit 42 measures, for example, the quantum states of a plurality of qubits in the final state. Note that the division processing by the division unit 41 and the operation execution processing by the execution unit 42 are performed, for example, for each convolution/fully connected layer of the QCNN quantum circuit.

The calculation unit 43 calculates, for example, an average value of the measured values of the quantum states measured by the execution unit 42. FIG. 12 is a diagram for describing calculation of an average of measured values of qubits according to the present embodiment. As illustrated in FIG. 12, the calculation unit 43 calculates, for example, an average value of the measured values of the quantum states of the plurality of qubits in the final state measured by the execution unit 42. As illustrated in FIG. 12, in the present embodiment, since a plurality of measured values is obtained by one execution of the QCNN quantum circuit, an average value of the plurality of measured values is calculated. In addition, for example, the calculation unit 43 inputs a plurality of qubits to the QCNN quantum circuit a predetermined number of times and calculates an average value of average values of a plurality of measured values calculated for the input qubits. That is, in the present embodiment, the QCNN quantum circuit is executed a predetermined number of times, and the average value of the average values of the measured values calculated in executions of the quantum circuit is further calculated as an expected value of the measured values.

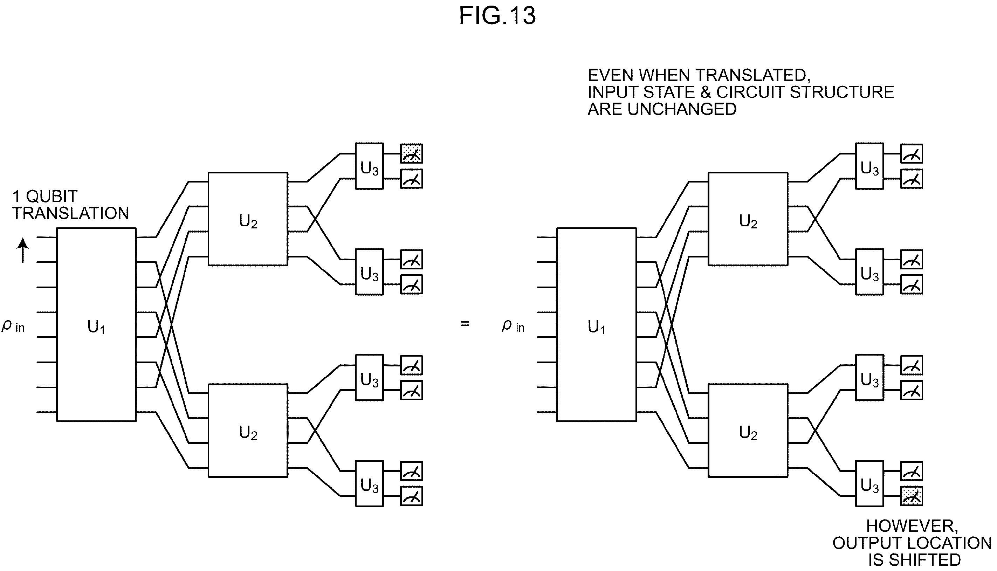

As described above, in the present embodiment, the average value of the plurality of measured values is set as the output of the QCNN, but the reason why the average value can be taken, that is, equivalence of the plurality of measured values will be described. FIG. 13 is a diagram (1) for describing equivalence of measured values of qubits according to the present embodiment. FIG. 13 illustrates an example of a case where one qubit is translated by a translation operation. As illustrated in FIG. 13, even if one qubit is translated, only the location of the output is shifted, the input state and the circuit structure themselves are unchanged, and the outputs of the respective qubits are all the same.

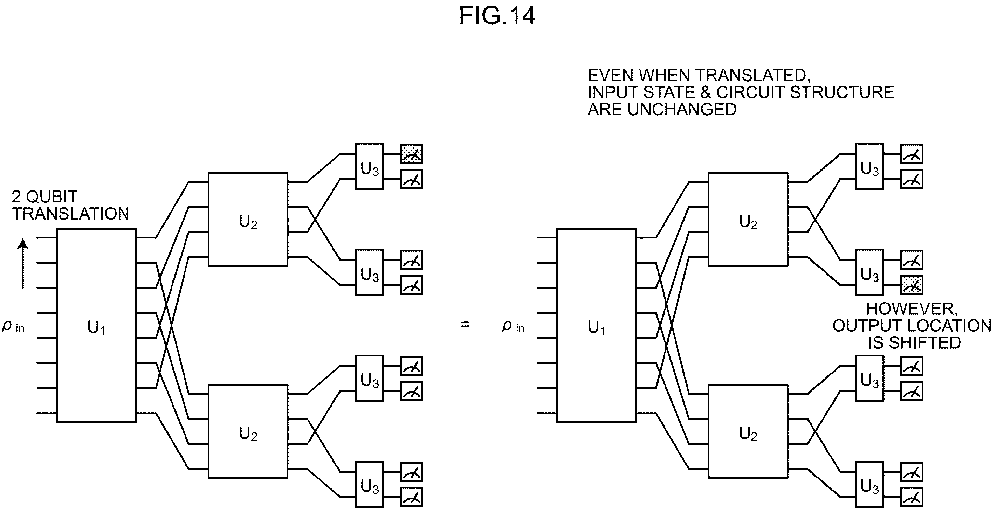

Note that FIG. 13 illustrates an example of one qubit translation, but the same applies to a case where more qubits are translated, such as translation of two qubits. FIG. 14 is a diagram (2) for describing equivalence of measured values of qubits according to the present embodiment. As illustrated in FIG. 14, in a case where two qubits are translated by a translation operation, only the location of the output is shifted, the input state and the circuit structure themselves are unchanged, and the outputs of the respective qubits are all the same similarly to one qubit translation illustrated in FIG. 13.

Therefore, in the present embodiment, by executing the QCNN quantum circuit and measuring all output qubits, it is possible to obtain many measured values as compared to the conventional quantum circuit, and to improve the measurement efficiency of the QCNN, and thus the execution efficiency. Note that, regarding the measurement efficiency of the present embodiment, for example, even if n times more measured values are obtained as compared to the conventional quantum circuit, the measurement efficiency does not necessarily become n times because such measured values are correlated with each other by quantum entanglement.

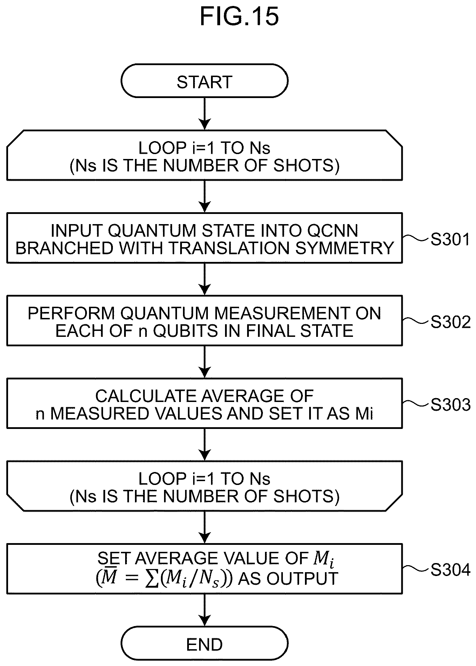

The flow of output measurement processing as described above will be described. FIG. 15 is a flowchart illustrating a flow of output measurement processing by the QCNN branched with translation symmetry according to the present embodiment.

First, as illustrated in FIG. 15, the information processing apparatus 10 inputs, for example, quantum states of n qubits to the quantum circuit of the QCNN branched with translation symmetry (step S301). Note that steps S301 to S303 are repeated for the number of shots $N_s$, which is the number of executions of the designated quantum circuit.

Next, for example, the information processing apparatus 10 performs quantum measurement on each of the n qubits in the final state to obtain n measured values (step S302).

Next, the information processing apparatus 10 calculates, for example, an average of the n measured values obtained in step S302, and sets the average as an average value $M_i$ (step S303). Then, the information processing apparatus 10 repeats steps S301 to S303 for the number of shots $N_s$, for example, to obtain $N_s$ average values $M_i$.

Next, the information processing apparatus 10 calculates, for example, an average value ($= \Sigma (M_i/N_s)$) of the $N_s$

average values $M_i$, and sets the average value as an output of the QCNN (step S304). After the execution of step S304, the measurement processing illustrated in FIG. 15 ends.

Returning to the description of FIG. 5, the setting unit 44 sets an independent parameter for each of a plurality of rotation gates of the quantum circuit designed to make each layer of the QCNN symmetric with respect to a translation operation for qubits, which is controlled by one variational parameter of the loss function.

In addition, for example, the calculation unit 43 fixes the parameter set by the setting unit 44 to one variational parameter of the loss function. In addition, the calculation unit 43 calculates, for example, a derivative of a predetermined number of measurement expected values of the quantum circuit designed to make each layer of the QCNN symmetric with respect to a translation operation for qubits with respect to the one parameter. Furthermore, the calculation unit 43 calculates the gradient of the output of the QCNN on the basis of, for example, the predetermined number of derivative values, the number of parameters, and the predetermined number. Note that calculation of the gradient includes, for example, processing of calculating the gradient by calculating a formula of "the sum of the predetermined number of derivative values × the number of parameters/the predetermined number." The gradient measurement method for the output of the QCNN of the present embodiment as above will be described more specifically.

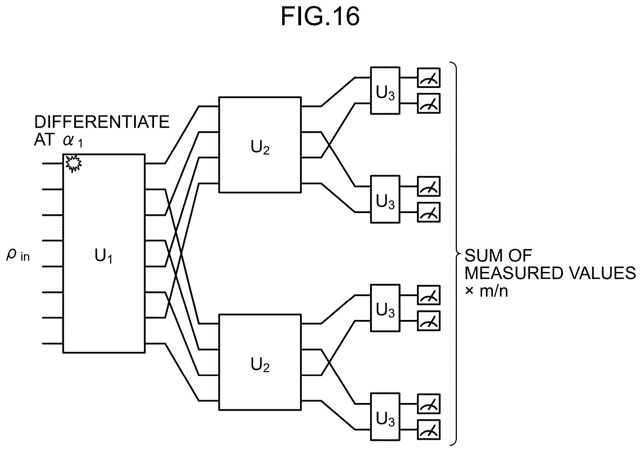

In the gradient measurement method for the output of the QCNN of the present embodiment, a differentiation method for the output of the QCNN according to a variational parameter $\alpha$ is used. FIG. 16 is a diagram for describing the gradient measurement method for the output of the QCNN according to the present embodiment. Although details will be described later, in the differentiation method for the output of the QCNN according to the variational parameter $\alpha$, only a derivative of $\alpha_1$ is considered, and derivatives of a predetermined number n of measured values of the branched QCNN at $\alpha_1$ are calculated by a parameter shift method or the like, as illustrated in FIG. 16. Then, as illustrated in FIG. 16, the formula of "sum of n derivative values (= respective measured values) by $\alpha_1$ × m/n" is calculated, and the calculation result is set as the gradient of the output of the QCNN. Note that, although details will be described later, m is the number of a plurality of gates controlled by the variational parameter $\alpha$, and in the present embodiment, since it is considered that gates are controlled by independent parameters ($\alpha_1$ to $\alpha_m$), the number of parameters is m. In the present embodiment, as illustrated in FIG. 16, even in the gradient measurement method, a plurality of measured values can be obtained and used by one execution of the quantum circuit of the QCNN, and thus the measurement efficiency of the QCNN, and thus the execution efficiency can be improved.

The gradient measurement method for the output of the QCNN of the present embodiment will be described more specifically. In the present embodiment, gradient measurement according to the chain law is performed, and for example, as represented by the following formula (4), a gradient is calculated by differentiating the loss function $L(\{<Z_1(\alpha)>_i\})$ with the variational parameter $\alpha$ of the QCNN.

$$\frac{\partial L}{\partial \alpha} = \sum_{i=1}^{N_t} \frac{\partial \langle Z_1 \rangle_i}{\partial \alpha} \frac{\partial L}{\partial \langle Z_1 \rangle_i} \qquad \cdots (4)$$

In Formula (4), for example, i is a label of training data, and $N_t$ is the number of pieces of training data. $<Z_1>_i$ can be calculated as represented by Formula (2), and is determined by $<Z_1>_i = <\phi i |U^\dagger Z_1 U | \phi_1>$. In addition, since $\partial L/\partial <Z_1>_i$ is determined only from the definition of L and the value of $<Z_1>_i$ in Formula (4), $\partial <Z_1>_i/\partial \alpha$ is focused here. In the present embodiment, the derivative of the loss function in Formula (4) is obtained by quantum calculation.

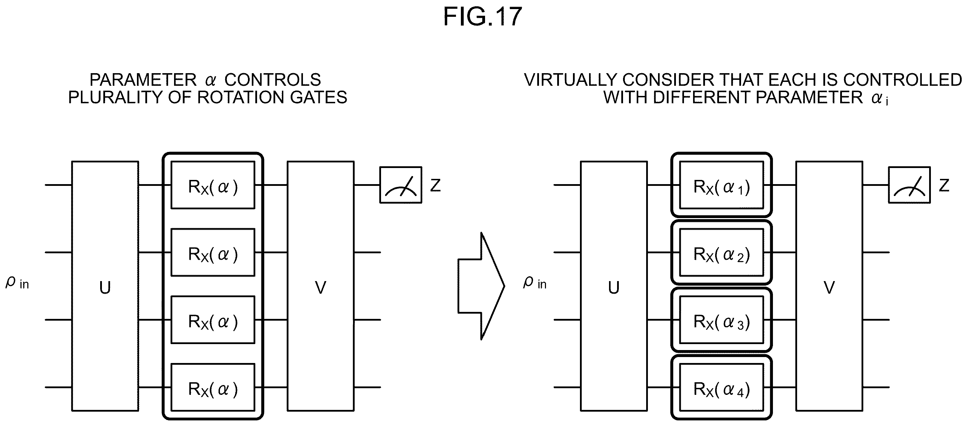

Here, in the translationally symmetric QCNN of the present embodiment, as illustrated in FIG. 7, one parameter (for example, $\alpha$) controls a plurality of gates. Therefore, a gradient measurement method in a case where one parameter controls a plurality of gates will be described. FIG. 17 is a diagram (1) for describing a gradient measurement method in a case where one parameter controls a plurality of gates according to the present embodiment. As illustrated in FIG. 17, in the present embodiment, for example, one parameter $\alpha$ for controlling a plurality of gates is virtually considered to be a parameter $\alpha_i$ (i=1 to m) in which each of the parameters of the plurality of gates is different. Here, m is the number of gates controlled by the variational parameter $\alpha$ as described above.

Then, let $\alpha_i$ be a function of $\alpha$ and $\alpha_i(\alpha)=\alpha$, and $\partial <Z_1>/\partial \alpha$ expressed by the following formula (5) is obtained by the chain law of differentiation.

$$\frac{\partial \langle Z_1 \rangle}{\partial \alpha} = \sum_{i=1}^{m} \frac{\partial \alpha_i}{\partial \alpha} \frac{\partial \langle Z_1 \rangle}{\partial \alpha_i} = \sum_{i=1}^{m} \frac{\partial \langle Z_1 \rangle}{\partial \alpha_i} \qquad \cdots (5)$$

Note that $\partial <Z_1>/\partial \alpha_i$ can be quantum calculated by, for example, a parameter shift method, which is a conventional algorithm, as represented by the following formula (6).

$$\frac{\partial \langle Z_1 \rangle}{\partial \alpha_i}\bigg|_{\alpha_i=\alpha} = \langle Z_1 \rangle|_{\alpha_i=\alpha+\pi/4} - \langle Z_1 \rangle|_{\alpha_i=\alpha-\pi/4} \qquad \cdots (6)$$

In Formula (6), $\langle Z_1 \rangle|_{\alpha i=\alpha\pm/4}$ is, for example, an expected value of $Z_1$ in a quantum circuit in which only $\alpha_i$ is set to $\alpha\pm\pi/4$ and other $\alpha_{j(\neq i)}$ set to $\alpha$.

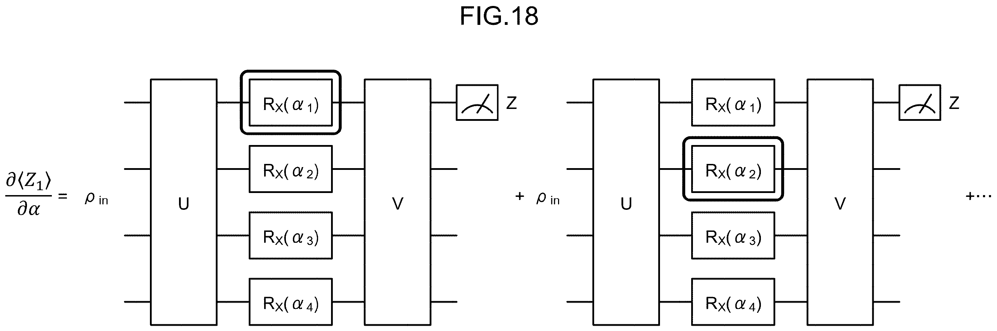

However, to obtain $\partial \langle Z_1 \rangle/\partial\alpha$, it is expected to calculate derivatives for $\alpha_1$ to $\alpha_m$. FIG. 18 is a diagram (2) for describing a gradient measurement method in a case where one parameter controls a plurality of gates according to the present embodiment. For example, calculation of a derivative for each of the parameters $\alpha_1$ to $\alpha_m$ of each gate in a portion surrounded by a frame line in FIG. 18 is expected, but in the present embodiment, derivatives for $\alpha_1$ to $\alpha_m$ can be collectively calculated according to branching of QCNN. Therefore, even in the gradient measurement method, it is possible to improve the measurement efficiency of the QCNN and thus the execution efficiency.

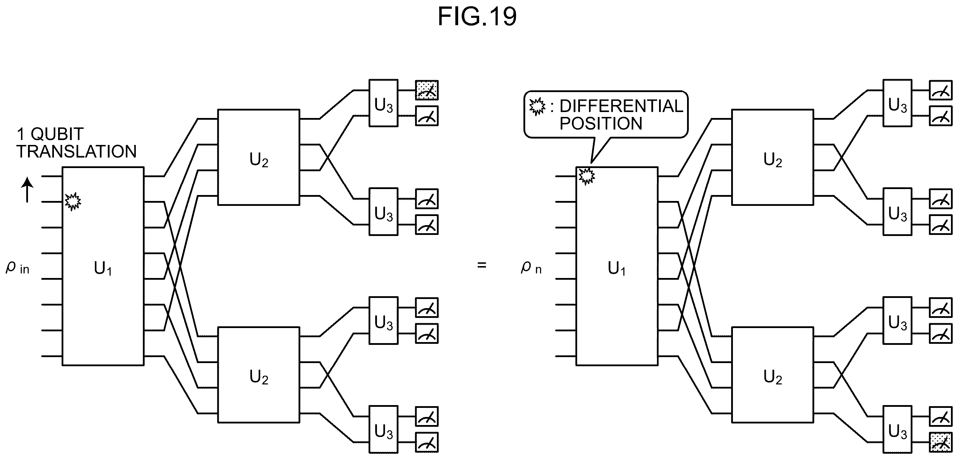

As described above, in the present embodiment, a gradient can be calculated by obtaining a plurality of derivative values by one quantum circuit of the QCNN, and the reason therefor will be described. FIG. 19 is a diagram (1) for describing efficiency measurement of a gradient by a branched QCNN according to the present embodiment. FIG. 19 illustrates an example of a case where one qubit is translated by a translation operation and the differential position is moved to $\alpha_1$. As illustrated in FIG. 19, even if one qubit is translated, only the location of the output is shifted, and when the differential position is fixed to $\alpha_1$, for example, each of the branched outputs corresponds to the derivative of $\alpha_i$, and the gradient can be measured by one quantum circuit.

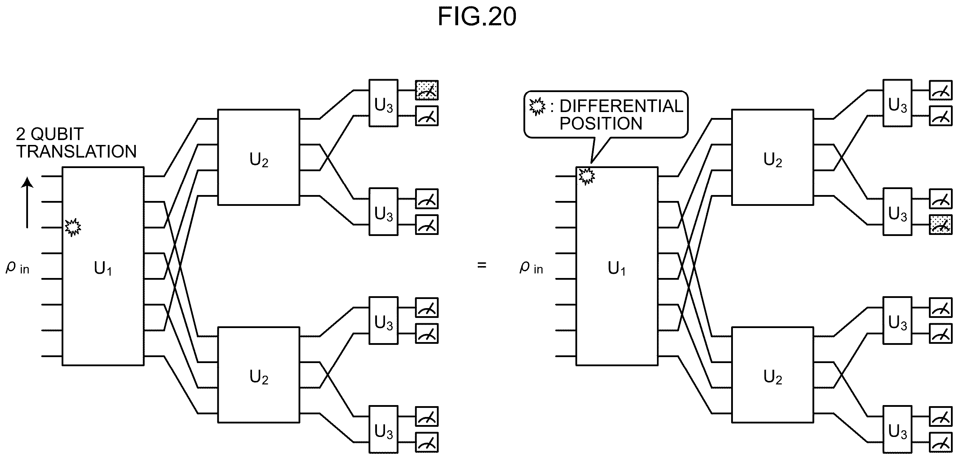

Note that FIG. 19 illustrates an example of one qubit translation, but the same applies to a case where more qubits are translated, such as translation of two qubits. FIG. 20 is a diagram (2) for describing efficiency measurement of a gradient by the branched QCNN according to the present embodiment. As illustrated in FIG. 20, even in a case where two qubits are translated by a translation operation, similarly to one qubit translation illustrated in FIG. 19, the gradient can be measured by one quantum circuit only by shifting the location of the output.

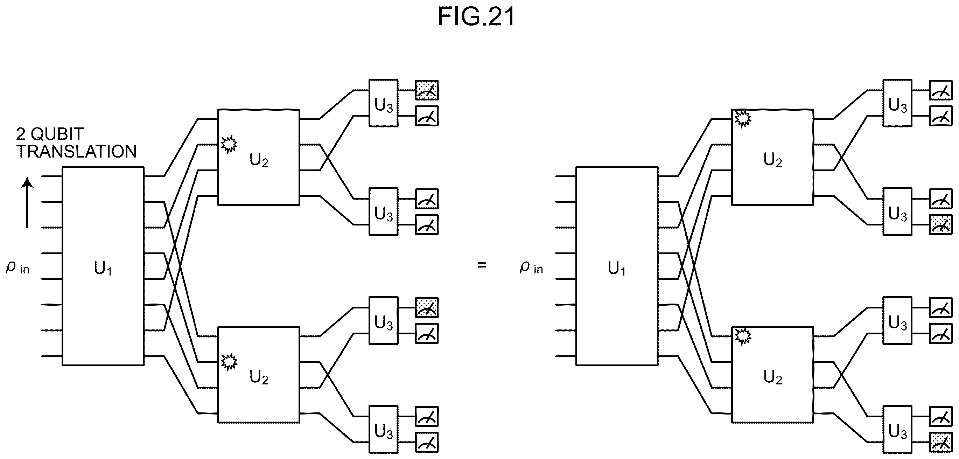

In addition, the second and subsequent differentiations of the QCNN can also improve the measurement efficiency by branching. FIG. 21 is a diagram (3) for describing efficiency measurement of a gradient by the branched QCNN according to the present embodiment. In the case of the example of FIG. 21, each of the upper four outputs of the qubits corresponds to each term of the differential formula. Similarly, each of the lower four outputs of the qubits corresponds to each term of the differential formula. By performing measurement on both the upper and lower branches, $4\times2=8$ measured values can be obtained, and the measurement efficiency can be improved as compared to the conventional quantum circuit of QCNN.

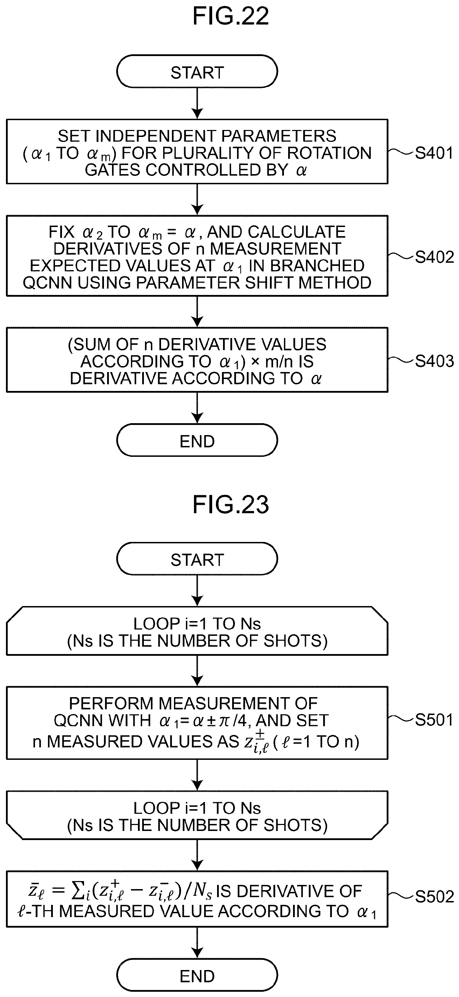

The flow of output gradient measurement processing as described above will be described. FIG. 22 is a flowchart illustrating a flow of gradient measurement processing for the output of the QCNN according to the present embodiment.

First, as illustrated in FIG. 22, the information processing apparatus 10 sets independent parameters ($\alpha_1$ to $\alpha_m$) for a plurality of rotation gates controlled by $\alpha$, for example (step S401).

Next, the information processing apparatus 10 fixes $\alpha_2$ to $\alpha_m = \alpha$, for example, and calculates derivatives of n measurement expected values in the branched QCNN at $\alpha_1$ using the parameter shift method (step S402). A flow of differential measurement processing by the parameter shift method in step S402 will be described. FIG. 23 is a flowchart illustrating a flow of differential measurement processing by the parameter shift method according to the present embodiment.

As illustrated in FIG. 23, for example, the information processing apparatus 10 performs QCNN measurement with $\alpha_1=\alpha\pm\pi/4$, and sets n measured values as $z^{\pm}_{i,l}$ (l=1 to n) (step S501). Step S501 is repeated for the number of shots $N_s$, which is the number of executions of the designated quantum circuit.

Next, the information processing apparatus 10 calculates, for example, an average value ($=\Sigma_i(z^+_{i,l}-z^-_{i,l})/N_s$) of the differences between the measured values as a derivative of the l-th measured value according to $\alpha_1$ (step S502). After execution of step S502, the differential measurement processing illustrated in FIG. 23 ends, and the processing returns to the gradient measurement processing illustrated in FIG. 22.

Next, the information processing apparatus 10 calculates, for example, (sum of n derivative values by $\alpha_1$) $\times$ m/n as a derivative by $\alpha$ (step S403). After execution of step S403, the gradient measurement processing illustrated in FIG. 22 ends.

Returning to the description of FIG. 5, for example, the information processing apparatus 10 trains the QCNN branched with translation symmetry using training data that is a set of quantum states of a plurality of qubits and predetermined correct answer labels. Furthermore, the information processing apparatus 10 inputs quantum states of a plurality of qubits to the QCNN branched with translation symmetry and trained using training data, for example, and performs prediction for unknown data.

Although the present embodiment in which the QCNN can be executed more efficiently has been described above, numerical verification results for representing the effects of the present embodiment will be described below. In particular, it is represented numerically for the specific problem that the QCNN has sufficient performance to solve a classification task even if translation symmetry is imposed on the QCNN. In addition, for the specific problem, improvement rate of the measurement efficiency due to branching of the QCNN is illustrated. Further, the specific problem is set as quantum phase classification. More specifically, whether or not the ground state of Hamiltonian belongs to a symmetry protected topological (SPT) phase is classified by the QCNN. The Hamiltonian can be expressed by the following formula (7).

$$H = -\sum_{j=1}^{L} Z_j X_{j+1} Z_{j+2} - h_1 \sum_{j=1}^{L} X_j - h_2 \sum_{j=1}^{L} X_j X_{j+1} \qquad \cdots (7)$$

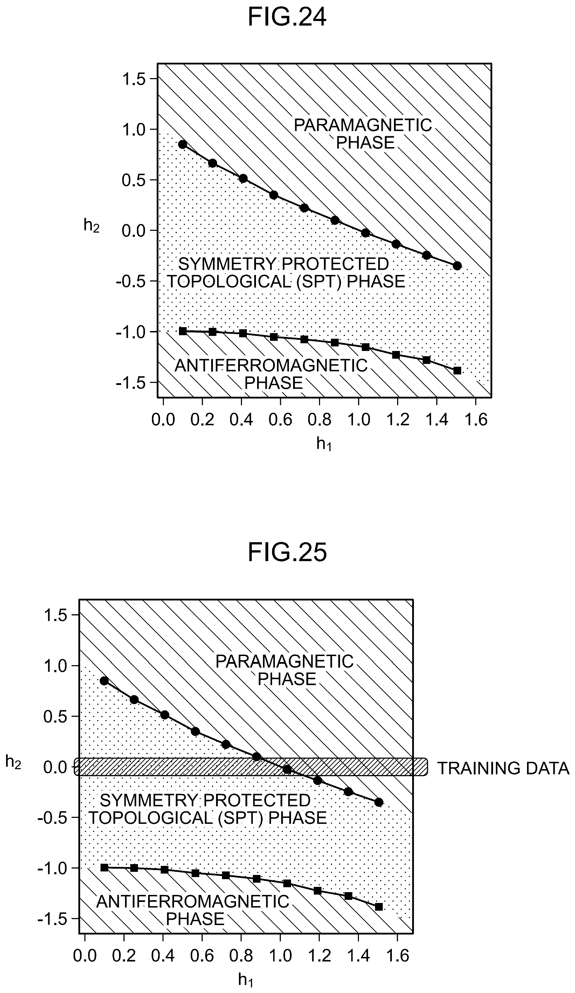

In Formula (7), $X_j$ and $Z_j$ represent, for example, a Pauli X and Z matrices for the j-th qubit, $h_1$ and $h_2$ represent real numbers, and L represents a positive integer, and here, it is assumed that a periodic boundary condition ($X_j=X_{j+L}$, $Z_j=Z_{j+L}$) is satisfied. Since the Hamiltonian expressed by Formula (7) satisfies translation symmetry ($T^{\dagger}HT=H$), the ground state that is input data is translationally symmetric, and thus, the condition to which the present embodiment can be applied (the precondition of the present embodiment described with reference to FIG. 3) is satisfied. In addition, it is known that the phase diagram of the ground state of the Hamiltonian indicates, for example, a phase diagram as illustrated in FIG. 24. FIG. 24 is a diagram illustrating an example of a phase diagram of the ground state of Hamiltonian.

In addition, it is assumed that the circuit structure is a quantum circuit of a QCNN branched with translation symmetry as illustrated in FIG. 2, each $U_i$ is formed as illustrated in FIG. 7, and simulation is performed assuming that d=5 and there are $4\times5=20$ variational parameters.

In addition, the loss function is expressed by the following formula (8).

$$L(\theta) = \frac{1}{N_t} \sum_{i=1}^{N_t=20} \left( y_i - \langle \phi_i | U(\theta)^{\dagger} Z_1 U(\theta) | \phi_i \rangle \right)^2 \qquad \cdots (8)$$

In Formula (8), $U(\theta)$ is, for example, the entire unitary transformation of the QCNN, and $Z_1$ is a physical quantity to be measured. In addition, as illustrated in FIG. 25, training data $|\phi_i\rangle$ is set as the ground state of the Hamiltonian at a point obtained by equally dividing $h_1$=0.05 to 1.95 on the $h_2$=0 axis into Nt=20. FIG. 25 is a diagram illustrating an example of a relationship between the phase diagram of the ground state of the Hamiltonian and training data of the QCNN. In addition, a correct answer label $y_i$ is $y_i$=1 (SPT phase) if $h_1$<1, and $y_i$=0 (other than SPT phase) if $h_1$>1. It is known that phase transition occurs at $h_1$=1 on the $h_2$=0 axis.

In addition, as simulation conditions, it is assumed that L=8, 12, and 16 qubit systems are simulated by a classical computer, 50 initial values of variational parameters are randomly selected, and an average thereof is calculated. In addition, as an optimization method, Adam which is an existing algorithm is used, and simulation is performed with the number of shots being infinite.

However, measurement efficiency is estimated with a finite number of shots. A method of estimating measurement efficiency will be described later. Note that, although it is generally considered that the representation capability of the QCNN decreases due to translation symmetry of the circuit, as a solution, the correct answer label of classification is set not to $\pm$1, which is the spectral end of the Pauli operator, but to a value therebetween (for example, 0.5 or the like).

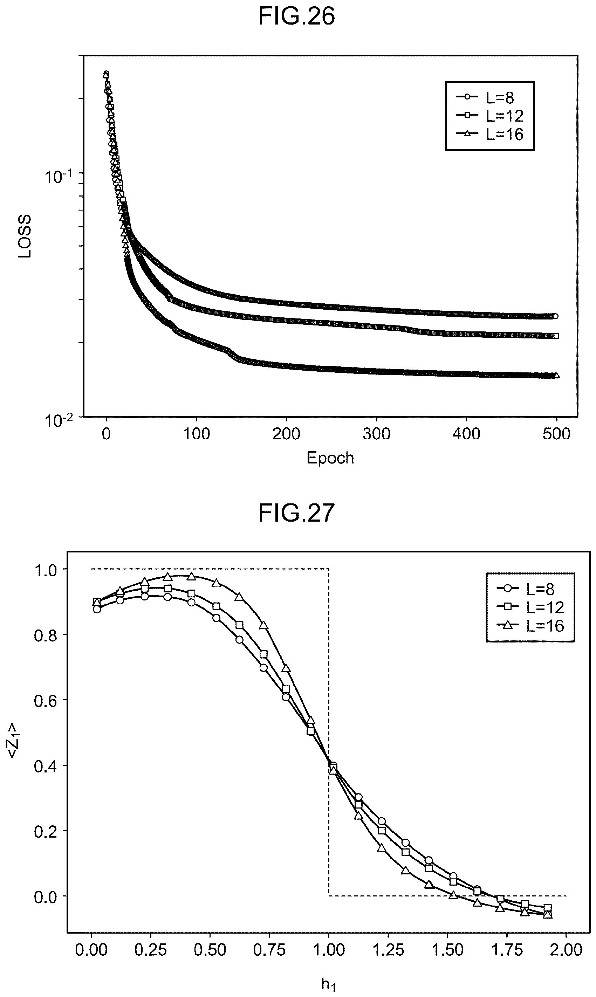

Next, performance evaluation by the above-described simulation will be described. FIG. 26 is a diagram illustrating an example of a change in the loss function due to the variational parameter update. As illustrated in FIG. 26, the loss function decreases by optimization, and eventually converges to a small value as the problem size L increases. Therefore, it is suggested that the QCNN branched with translation symmetry according to the present embodiment has a training possibility that can be applied to a large-scale problem.

FIG. 27 is a diagram illustrating an example of prediction results for each problem size for training data using a trained QCNN. FIG. 27 is a prediction result for data on the $h_2$=0 axis that is the training data using the trained QCNN, that is, known data for the QCNN. In FIG. 27, a broken line indicates a correct answer label, and the closer to the broken line, the better training. For quantification, 0.5, which is just the middle between the correct answer labels y=0 and 1, is considered as a reference for phase transition. When L=16, $<Z_1>$=0.5 is obtained at $h_1$ to 0.95, which means that phase transition can be correctly detected with an error of about 5% as compared to $h_1$=1 which is a true phase transition point. This result indicates that the QCNN branched with translation symmetry according to the present embodiment also has representation capability sufficient for solving the present task of classifying, by the QCNN, whether or not the ground state of the Hamiltonian belongs to the SPT phase.

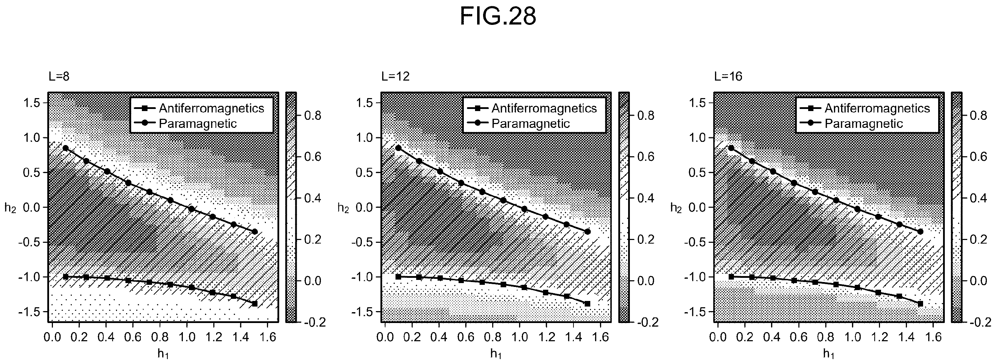

FIG. 28 is a diagram illustrating an example of prediction results for each problem size for unknown data using a trained QCNN. FIG. 28 is a prediction result for the phase diagram on the $h_1$-$h_2$ plane using the trained QCNN. FIG. 27 illustrates the prediction result for the data on the $h_2$=0 axis known to the QCNN, but FIG. 28 illustrates the prediction result for data other than the $h_2=0$ axis unknown to the QCNN. According to the prediction result of FIG. 28, lower phase transition (SPT phase $\rightarrow$ antiferromagnetic phase) not included in the training data can also be detected. This indicates that sufficient generalization performance also exists in the QCNN branched with translation symmetry according to the present embodiment.

The above results indicate that the QCNN branched with translation symmetry according to the present embodiment has sufficient trainability, representation ability, and generalization performance to solve the classification task of the quantum phase.

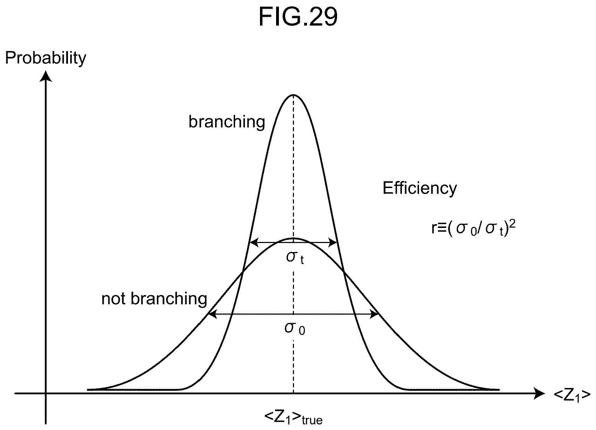

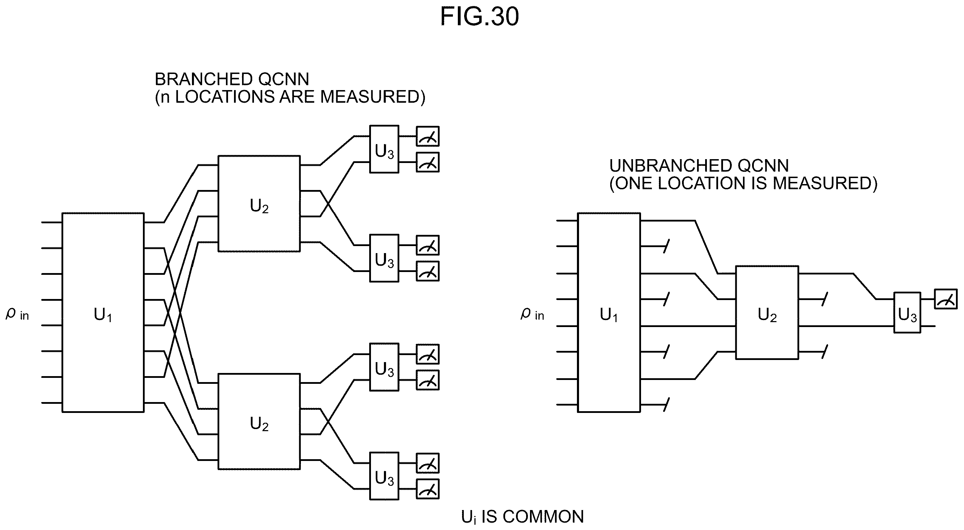

Note that an expected value estimated from an experiment with a finite number of shots is generally different from a true expected value due to a statistical error. When an expected value is estimated from an average of measured values, a probability distribution of the estimated value is a normal distribution of (mean = expected true value, standard deviation $\propto 1/\sqrt{N_s}$). The probability distribution of such estimated values is illustrated by FIG. 29. FIG. 29 is a diagram illustrating an example of a probability distribution of an estimated value. As illustrated in FIG. 29, the ratio of the measurement efficiency of a branched QCNN to the measurement efficiency of an unbranched QCNN is defined as, for example, $r=(\sigma_0/\sigma_t)^2$. $\sigma_0$ and $\sigma_t$ indicate standard deviations of expected value estimation in the unbranched QCNN and the branched QCNN, respectively. In addition, the index of $r=(\sigma_0/\sigma_t)^2$ means that when it is desired to estimate an expected value with certain accuracy, the expected number of shots in the branched QCNN becomes $1/r$ times compared with the unbranched QCNN. $\sigma_0$ and $\sigma_t$ are estimated, for example, by performing simulation of "estimation of $<Z_1>$ from results of 1000 shots" 10,000 times. Note that the branched QCNN and the unbranched QCNN are illustrated in FIG. 30. As illustrated in FIG. 30, in the quantum circuit of the unbranched QCNN, the number of measurement points of quantum states of the qubits is 1, whereas in the quantum circuit of the branched QCNN, there are n (8 in the example of FIG. 30) measurement points. In addition, each $U_i$ is common between the branched QCNN and the unbranched QCNN.

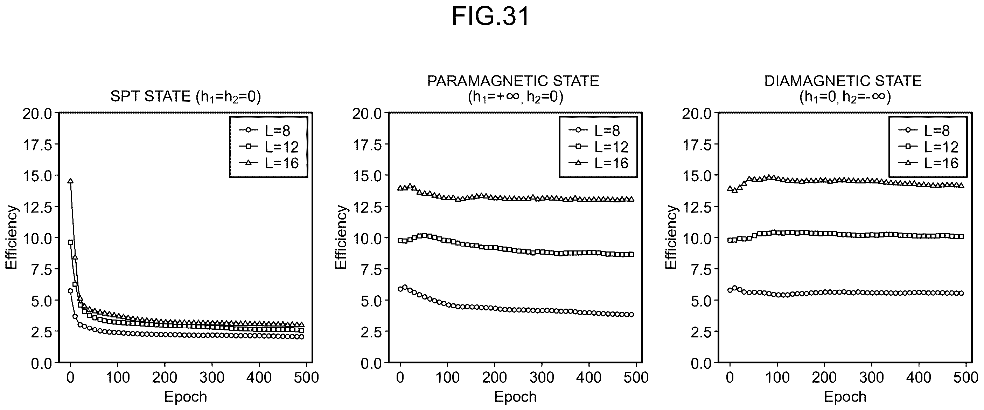

FIG. 31 is a diagram illustrating an example of measurement efficiency by branching of a QCNN for three representative states. As illustrated in FIG. 31, in the SPT state, the measurement efficiency decreases with training, and finally becomes about 2.5 to 3 times, and in the other two states, significant decrease in the measurement efficiency is not observed.

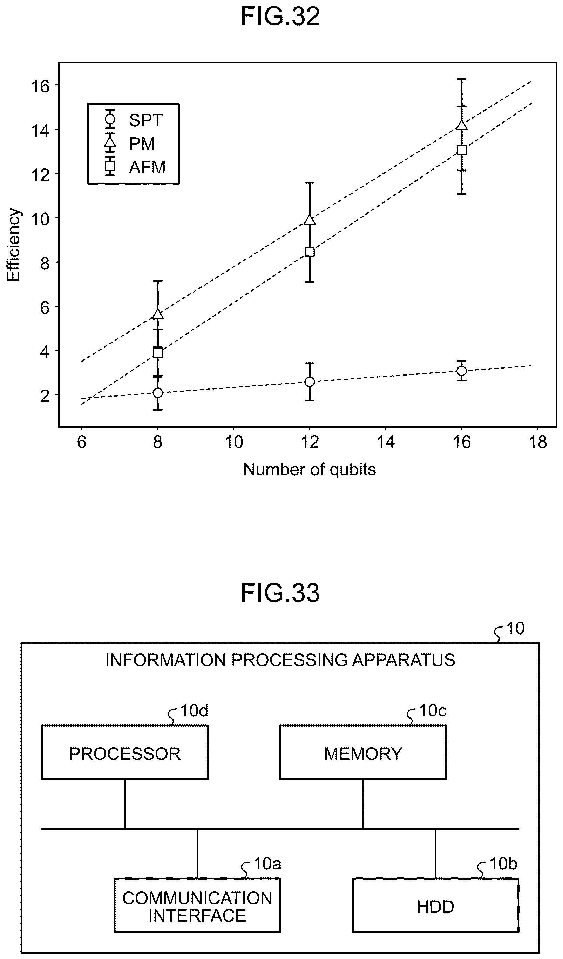

FIG. 32 is a diagram illustrating another example of measurement efficiency by branching of the QCNN for three representative states. FIG. 32 is a plot of measurement efficiency for three representative states at the end of training as the rate of improvement in measurement efficiency due to QCNN branching. In addition, linear fitting is performed for each of SPT, PM (paramagnetic), and AFM (antiferromagnetic). As a result, as illustrated in FIG. 32, linear fitting can be performed within the range of the error bars, which means that the measurement efficiency is improved by, for example, O(n) (n is a qubit number) times by branching of the circuit.

As described above, in the QCNN, the measurement efficiency can be increased O(n) (n is the qubit number) times by performing translation symmetry and branching on the quantum circuit as in the present embodiment. In addition, it was estimated that quantum phase transition can be detected by verification results for the QCNN branched with translation symmetry according to the present embodiment, and the measurement efficiency becomes O(n) times.

(Effects)

As described above, the information processing apparatus 10 inputs the quantum state of each of a plurality of qubits to the quantum circuit designed to make each layer of the QCNN symmetric with respect to a translation operation for the qubits, executes the operation in the first layer of the QCNN on the plurality of qubits, divides the plurality of qubits operated in the first layer into a plurality of qubit sets symmetric with respect to the translation operation, branches each of the plurality of qubits in the qubit sets into different branches of the quantum circuit to execute the operation in each layer of the QCNN, and measures the quantum state of each of the plurality of qubits in the final state.

In this manner, the information processing apparatus 10 divides the plurality of qubits input to the translationally symmetric quantum circuit of the QCNN into qubit sets, branches each of the qubits into different branches, executes operation of each layer, and measures the quantum state. As a result, the information processing apparatus 10 can execute the QCNN more efficiently.

Furthermore, the information processing apparatus 10 calculates an average value of measured values of quantum states.

As a result, the information processing apparatus 10 can execute the QCNN more efficiently.

Furthermore, the information processing apparatus 10 inputs a plurality of qubits to the quantum circuit a predetermined number of times, and calculates an average value of average values calculated for the qubits.

As a result, the information processing apparatus 10 can execute the QCNN more efficiently.

Furthermore, the information processing apparatus 10 sets an independent parameter for each of a plurality of rotation gates of the quantum circuit controlled by one variational parameter of the loss function, fixes the parameter to the variational parameter, calculates derivatives of a predetermined number of measurement expected values of the quantum circuit with respect to one parameter, and calculates a gradient of the output of the QCNN on the basis of the predetermined number of derivative values, the number of parameters, and the predetermined number.

As a result, the information processing apparatus 10 can execute the QCNN more efficiently.

Furthermore, processing of calculating the gradient executed by the information processing apparatus 10 includes processing of calculating the gradient by calculating the formula of the sum of a predetermined number of derivative values $\times$ the number of parameters/predetermined number.

As a result, the information processing apparatus 10 can execute the QCNN more efficiently.

Furthermore, the information processing apparatus 10 trains the QCNN by using training data that is a set of quantum states of a plurality of qubits and predetermined correct answer labels.

As a result, the information processing apparatus 10 can execute the QCNN more efficiently.

Furthermore, the information processing apparatus 10 inputs quantum states of a plurality of qubits to a QCNN trained using training data, and performs prediction for unknown data.

As a result, the information processing apparatus 10 can execute the QCNN more efficiently.

(System)

Processing procedures, control procedures, specific names, and information including various types of data and parameters illustrated in the above document or drawings may be arbitrarily changed unless otherwise specified. Furthermore, the specific examples, distributions, numerical values, and the like described in the examples are merely examples, and may be arbitrarily changed.

Furthermore, specific forms of distribution and integration of the components of the information processing apparatus 10 are not limited to those illustrated in the drawings. For example, the execution unit 42 of the information processing apparatus 10 may be distributed to a plurality of processing units, or the execution unit 42 and the calculation unit 43 of the information processing apparatus 10 may be integrated into one processing unit. That is, all or some of the components may be functionally or physically distributed/integrated in an arbitrary unit according to various loads, usage conditions, and the like. Furthermore, all or an arbitrary part of each processing function of each device can be realized by a central processing unit (CPU) and a program analyzed and executed by the CPU, or can be realized as hardware by wired logic.

FIG. 33 is a diagram illustrating a hardware configuration example of the information processing apparatus 10 according to the present embodiment. As illustrated in FIG. 33, the information processing apparatus 10 includes a communication interface 10a, a hard disk drive (HDD) 10b, a memory 10c, and a processor 10d. The units illustrated in FIG. 33 are connected to each other by a bus or the like.

The communication interface 10a is a network interface card or the like, and communicates with another information processing apparatus. The HDD 10b stores, for example, programs and data for operating the functions of the information processing apparatus 10.

The processor 10d is a CPU, a micro processing unit (MPU), a graphics processing unit (GPU), or the like. Furthermore, the processor 10d may be realized by an integrated circuit such as an application specific integrated circuit (ASIC) or a field programmable gate array (FPGA). For example, the processor 10d reads a program for executing processing similar to each processing unit illustrated in FIG. 5 or the like from the HDD 10b or the like and develops the program in the memory 10c. As a result, the processor 10d can operate as a hardware circuit that executes a process of realizing each function of the information processing apparatus 10.

Furthermore, the information processing apparatus 10 can also implement functions similar to those of the above-described example by reading a program from a recording medium by a medium reading device and executing the read program. Note that the program referred to in this other example is not limited to being executed by the information processing apparatus 10. For example, the above example may be similarly applied to a case where another information processing apparatus executes a program or a case where another information processing apparatus and the information processing apparatus 10 execute a program in cooperation with each other.

The program may be distributed via a network such as the Internet. In addition, the program may be recorded in a computer-readable storage medium such as a hard disk, a flexible disk (FD), a CD-ROM, a magneto-optical disk (MO), or a digital versatile disc (DVD). Then, the program may be executed by being read from the recording medium by the information processing apparatus 10 or the like.

Explanation of Reference

10      INFORMATION PROCESSING APPARATUS
10a     COMMUNICATION INTERFACE
10b     HDD

10c     MEMORY
10d     PROCESSOR
20      COMMUNICATION UNIT
30      STORAGE UNIT
31      QUANTUM CIRCUIT INFORMATION
32      QUANTUM STATE INFORMATION
40      CONTROL UNIT
41      DIVISION UNIT
42      EXECUTION UNIT
43      CALCULATION UNIT
44      SETTING UNIT

**Claims**

1. An information processing program causing a computer to execute processing of:

    inputting a quantum state of each of a plurality of qubits into a quantum circuit designed to make each layer of a quantum convolutional neural network symmetric with respect to a translation operation for qubits;
    executing an operation in a first layer of the quantum convolutional neural network on the plurality of qubits;
    dividing the plurality of qubits operated in the first layer into a plurality of qubit sets so as to be symmetric with respect to the translation operation;
    branching each of the plurality of qubits in the qubit sets into a different branch of the quantum circuit to execute the operation in each layer of the quantum convolutional neural network; and
    measuring a quantum state of each of the plurality of qubits in a final state.

2. The information processing program according to claim 1, wherein the computer is caused to execute processing of calculating an average value of measured values of the quantum state.

3. The information processing program according to claim 2, wherein the computer is caused to execute processing of inputting the plurality of qubits to the quantum circuit a predetermined number of times and calculating an average value of the average values calculated for the respective qubits.

4. The information processing program according to claim 1, wherein the computer is caused to execute processing of:

    setting an independent parameter for each of a plurality of rotation gates of the quantum circuit, the rotation gates being controlled by one variational parameter of a loss function;
    fixing the parameter to the variational parameter, and calculating derivatives of a predetermined number of measurement expected values of the quantum circuit with respect to one of the parameters; and
    calculating a gradient of an output of the quantum convolutional neural network on the basis of the predetermined number of derivative values, the number of parameters, and the predetermined number.

5. The information processing program according to claim 4, wherein the processing of calculating a gradient comprises processing of calculating the gradient by calculating a formula of (a sum of the predetermined number of derivative values) $\times$ (the number of parameters/the predetermined number).

6. The information processing program according to any one of claims 1 to 5, causing the computer to execute processing of training the quantum convolutional neural network using training data that is a set of quantum states of the plurality of qubits and predetermined correct answer labels.

7. The information processing program according to claim 6, wherein the quantum states of the plurality of qubits are input to the quantum convolutional neural network trained using the training data, and prediction for unknown data is performed.

8. An information processing apparatus comprising a control unit configured to execute processing of:

    inputting a quantum state of each of a plurality of qubits into a quantum circuit designed to make each layer of a quantum convolutional neural network symmetric with respect to a translation operation for qubits;
    executing an operation in a first layer of the quantum convolutional neural network on the plurality of qubits;

dividing the plurality of qubits operated in the first layer into a plurality of qubit sets so as to be symmetric with respect to the translation operation;

branching each of the plurality of qubits in the qubit sets into a different branch of the quantum circuit to execute the operation in each layer of the quantum convolutional neural network; and

measuring a quantum state of each of the plurality of qubits in a final state.

9. An information processing method causing a computer to execute processing of:

inputting a quantum state of each of a plurality of qubits into a quantum circuit designed to make each layer of a quantum convolutional neural network symmetric with respect to a translation operation for qubits;

executing an operation in a first layer of the quantum convolutional neural network on the plurality of qubits;

dividing the plurality of qubits operated in the first layer into a plurality of qubit sets so as to be symmetric with respect to the translation operation;

branching each of the plurality of qubits in the qubit sets into a different branch of the quantum circuit to execute the operation in each layer of the quantum convolutional neural network; and

measuring a quantum state of each of the plurality of qubits in a final state.

FIG.1

# FIG.2

# FIG.3

```
                    ┌─────────────┐
                    │    START    │
                    └─────────────┘
                           │
                           ▼
                                        ⌐S101
              ╱─────────────────────────╲
             ╱      (CONFIRMATION         ╲
            ╱      OF PRECONDITION)        ╲         NO
           ⟨    IS INPUT QUANTUM STATE      ⟩──────────────────┐
            ╲     TRANSLATIONALLY          ╱                    │
             ╲       SYMMETRIC?           ╱                     │
              ╲─────────────────────────╱                      │
                         │                                      │
                       YES                                      │
                         ▼                                      ▼
  ┌ ─ ─ ─ ─ ─ ─ ─ ─ ─ ─ ─ ─ ─ ─ ─ ─ ─ ┐   ┌ ─ ─ ─ ─ ─ ─ ─ ─ ─ ─ ─ ─ ─ ─ ─ ─ ─ ─ ┐
    PRESENT                                   CONVENTIONAL
  │ EMBODIMENT                         │   │ METHOD                                │
                            ⌐S102                                       ⌐S106
  │ ┌───────────────────────────────┐ │   │ ┌───────────────────────────────────┐ │
    │   MAKE EACH LAYER OF QCNN      │       │          DESIGN QCNN              │
  │ │ TRANSLATIONALLY SYMMETRIC      │ │   │ └───────────────────────────────────┘ │
    └───────────────────────────────┘                        │
  │               │                   │   │                  │                    │
                  ▼        ⌐S103                              │
  │ ┌───────────────────────────────┐ │   │                  │                    │
    │   BRANCH TRANSLATIONALLY       │       │                │                    │
  │ │      SYMMETRIC QCNN            │ │   │                  │                    │
    └───────────────────────────────┘                        │
  │               │                   │   │                  │                    │
                  ▼        ⌐S104                              ▼        ⌐S107
  │ ┌───────────────────────────────┐ │   │ ┌───────────────────────────────────┐ │
    │ PERFORM TRAINING OF TRAINING   │       │ PERFORM TRAINING OF TRAINING      │
  │ │ DATA USING QCNN BRANCHED       │ │   │ │     DATA USING QCNN               │ │
    │ WITH TRANSLATION SYMMETRY      │       │                                   │
  │ └───────────────────────────────┘ │   │ └───────────────────────────────────┘ │
                  │                                          │
  │               ▼        ⌐S105       │   │                ▼        ⌐S108         │
    ┌───────────────────────────────┐       ┌───────────────────────────────────┐
  │ │ PERFORM PREDICTION ON          │ │   │ │ PERFORM PREDICTION ON             │ │
    │ UNKNOWN DATA BY QCNN           │       │ UNKNOWN DATA BY TRAINED           │
  │ │ TRAINED AND BRANCHED WITH      │ │   │ │ QCNN                              │ │
    │ TRANSLATION SYMMETRY           │       │                                   │
  │ └───────────────────────────────┘ │   │ └───────────────────────────────────┘ │
                  │                                          │
  └ ─ ─ ─ ─ ─ ─ ─ │ ─ ─ ─ ─ ─ ─ ─ ─ ─ ┘   └ ─ ─ ─ ─ ─ ─ ─ │ ─ ─ ─ ─ ─ ─ ─ ─ ─ ─ ┘
                  │                                          │
                  ▼◄─────────────────────────────────────────┘
           ┌─────────────┐
           │     END     │
           └─────────────┘
```

# FIG.4

$$\rho_{in}$$

$$T^{\dagger} \rho_{in} T$$

# FIG.5

```
10
INFORMATION PROCESSING APPARATUS

20
COMMUNICATION UNIT

40
CONTROL UNIT

30
STORAGE UNIT

41
DIVISION UNIT

31
QUANTUM CIRCUIT
INFORMATION

42
EXECUTION UNIT

43
CALCULATION
UNIT

32
QUANTUM STATE
INFORMATION

44
SETTING UNIT
```

# FIG.6

# FIG.7

# FIG.8

QCNN TO BE CALCULATED ORIGINALLY

# FIG.9

# FIG.10

BRANCH

# FIG.11

```
                    ┌─────────────┐
                    │    START    │
                    └──────┬──────┘
                           │
                           ▼
┌───────────────────────────────────────────────────┐
│   DIVIDE n QUBITS INTO MINI-BLOCKS INCLUDING       │
│        d QUBITS (d IS DIVISOR OF n)                │      ~S201
│      AT TIME OF DIVISION, MINI-BLOCKS ARE          │
│   TRANSLATIONALLY SYMMETRIC TO EACH OTHER          │
└─────────────────────────┬─────────────────────────┘
                          │
                          ▼
┌───────────────────────────────────────────────────┐
│     BRANCH d QUBITS IN EACH MINI-BLOCK INTO        │      ~S202
│              DIFFERENT BRANCHES                     │
└─────────────────────────┬─────────────────────────┘
                          │
                          ▼
┌───────────────────────────────────────────────────┐
│  PERFORM ABOVE BRANCHING OPERATION UNTIL           │      ~S203
│ NUMBER OF QUBITS BECOMES SUFFICIENTLY SMALL        │
└─────────────────────────┬─────────────────────────┘
                          │
                          ▼
                    ┌─────────────┐
                    │     END     │
                    └─────────────┘
```

# FIG.12

AVERAGE OF
MEASURED VALUES

FIG.13

1 QUBIT TRANSLATION

$\rho_{in}$

$U_1$

$U_2$

$U_3$

$=$

EVEN WHEN TRANSLATED, INPUT STATE & CIRCUIT STRUCTURE ARE UNCHANGED

$\rho_{in}$

$U_1$

$U_2$

$U_3$

HOWEVER, OUTPUT LOCATION IS SHIFTED

# FIG.14

EVEN WHEN TRANSLATED,
INPUT STATE & CIRCUIT STRUCTURE
ARE UNCHANGED

2 QUBIT
TRANSLATION

$\rho_{in}$

$U_1$    $U_2$    $U_3$

=   $\rho_{in}$

HOWEVER,
OUTPUT LOCATION
IS SHIFTED

# FIG.15

```
                    START

        LOOP i=1 TO Ns
      (Ns IS THE NUMBER OF SHOTS)

    INPUT QUANTUM STATE INTO QCNN          S301
  BRANCHED WITH TRANSLATION SYMMETRY

    PERFORM QUANTUM MEASUREMENT ON          S302
    EACH OF n QUBITS IN FINAL STATE

        CALCULATE AVERAGE OF               S303
  n MEASURED VALUES AND SET IT AS Mi

        LOOP i=1 TO Ns
      (Ns IS THE NUMBER OF SHOTS)

      SET AVERAGE VALUE OF $M_i$            S304
  ($\bar{M} = \sum(M_i/N_s)$) AS OUTPUT

                     END
```

# FIG.16

DIFFERENTIATE AT $\alpha_1$

$\rho_{in}$

$U_1$

$U_2$

$U_2$

$U_3$

$U_3$

$U_3$

$U_3$

SUM OF
MEASURED VALUES
× m/n

FIG.17

PARAMETER $\alpha$ CONTROLS
PLURALITY OF ROTATION GATES

VIRTUALLY CONSIDER THAT EACH IS CONTROLLED
WITH DIFFERENT PARAMETER $\alpha_i$

FIG.18

# FIG.19

EP 4 722 993 A1

FIG.20

FIG.21

EP 4 722 993 A1

# FIG.22

```
         ┌─────────────┐
         │    START    │
         └─────────────┘
                │
                ▼
┌───────────────────────────────────┐
│    SET INDEPENDENT PARAMETERS      │
│ ($\alpha_1$ TO $\alpha_m$) FOR PLURALITY OF ROTATION │───S401
│      GATES CONTROLLED BY $\alpha$       │
└───────────────────────────────────┘
                │
                ▼
┌───────────────────────────────────┐
│   FIX $\alpha_2$ TO $\alpha_m$ = $\alpha$, AND CALCULATE   │
│    DERIVATIVES OF n MEASUREMENT     │
│ EXPECTED VALUES AT $\alpha_1$ IN BRANCHED │───S402
│  QCNN USING PARAMETER SHIFT METHOD  │
└───────────────────────────────────┘
                │
                ▼
┌───────────────────────────────────┐
│   (SUM OF n DERIVATIVE VALUES      │
│    ACCORDING TO $\alpha_1$) × m/n IS     │───S403
│   DERIVATIVE ACCORDING TO $\alpha$      │
└───────────────────────────────────┘
                │
                ▼
         ┌─────────────┐
         │     END     │
         └─────────────┘
```

# FIG.23

```
         ┌─────────────┐
         │    START    │
         └─────────────┘
                │
                ▼
┌───────────────────────────────────┐
│         LOOP i=1 TO Ns             │
│  (Ns IS THE NUMBER OF SHOTS)       │
└───────────────────────────────────┘
                │
                ▼
┌───────────────────────────────────┐
│     PERFORM MEASUREMENT OF         │
│  QCNN WITH $\alpha_1 = \alpha \pm \pi/4$, AND SET  │───S501
│ n MEASURED VALUES AS $z_{i,\ell}^{\pm}$ ($\ell$=1 TO n) │
└───────────────────────────────────┘
                │
                ▼
┌───────────────────────────────────┐
│         LOOP i=1 TO Ns             │
│  (Ns IS THE NUMBER OF SHOTS)       │
└───────────────────────────────────┘
                │
                ▼
┌───────────────────────────────────┐
│ $\bar{z}_\ell = \sum_i (z_{i,\ell}^+ - z_{i,\ell}^-)/N_s$ IS DERIVATIVE OF │───S502
│ $\ell$-TH MEASURED VALUE ACCORDING TO $\alpha_1$ │
└───────────────────────────────────┘
                │
                ▼
         ┌─────────────┐
         │     END     │
         └─────────────┘
```

## FIG.24

## FIG.25

## FIG.26

## FIG.27

FIG.28

EP 4 722 993 A1

## FIG.29

Probability

branching

Efficiency

$$r \equiv (\sigma_0 / \sigma_t)^2$$

$\sigma_t$

not branching

$\sigma_0$

$\langle Z_1 \rangle$

$\langle Z_1 \rangle_{true}$

# FIG.30

BRANCHED QCNN
(n LOCATIONS ARE MEASURED)

UNBRANCHED QCNN
(ONE LOCATION IS MEASURED)

$\rho_{in}$

$U_1$

$U_2$

$U_3$

$U_3$

$U_2$

$U_3$

$U_3$

$U_i$ IS COMMON

$\rho_{in}$

$U_1$

$U_2$

$U_3$

EP 4 722 993 A1

# FIG.31

# FIG.32

# FIG.33

## INTERNATIONAL SEARCH REPORT

| International application No. |
| --- |
| **PCT/JP2023/019573** |

| A. | CLASSIFICATION OF SUBJECT MATTER |
| --- | --- |

*G06N 10/60*(2022.01)i; *G06N 3/04*(2023.01)i
FI:    G06N10/60; G06N3/04

According to International Patent Classification (IPC) or to both national classification and IPC

| B. | FIELDS SEARCHED |
| --- | --- |

Minimum documentation searched (classification system followed by classification symbols)

G06N3/00-99/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | US 2021/0383189 A1 (PRESIDENT AND FELLOWS OF HARVARD COLLEGE) 09 December 2021 (2021-12-09)<br>    entire text, all drawings | 1-9 |
| A | WO 2022/230318 A1 (JAPAN SCIENCE AND TECHNOLOGY AGENCY) 03 November 2022 (2022-11-03)<br>    paragraphs [0042]-[0044], fig. 3-4 | 1-9 |
| T | CHINZEI, Koki et al. Splitting and Parallelizing of Quantum Convolutional Neural Networks for Learning Translationally Symmetric Data. arXiv [online]. 12 June 2023, [retrieved on 01 August 2023], internet:<URL: https://arxiv.org/abs/2306.07331>, <DOI: 10.48550/arXiv.2306.07331><br>    section 3 | 1-9 |

☐ Further documents are listed in the continuation of Box C.      ☑ See patent family annex.

| * | Special categories of cited documents: | | |
| --- | --- | --- | --- |
| "A" | document defining the general state of the art which is not considered to be of particular relevance | "T" | later document published after the international filing date or priority date and not in conflict with the application but cited to understand the principle or theory underlying the invention |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **01 August 2023** | **08 August 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

| International application No. |
| --- |
| **PCT/JP2023/019573** |

| Patent document cited in search report | | | Publication date (day/month/year) | Patent family member(s) | | | Publication date (day/month/year) |
| --- | --- | --- | --- | --- | --- | --- | --- |
| US | 2021/0383189 | A1 | 09 December 2021 | WO | 2020/072981 | A1 | |
| | | | | EP | 3861481 | A1 | |
| | | | | CA | 3112817 | A1 | |
| WO | 2022/230318 | A1 | 03 November 2022 | (Family: none) | | | |

Form PCT/ISA/210 (patent family annex) (January 2015)

## REFERENCES CITED IN THE DESCRIPTION

**Patent documents cited in the description**

- JP 2019096334 A
- JP 2022509841 A
- US 20220101164 A
- US 20220253741 A